# EUROPEAN PATENT SPECIFICATION

(11) **EP 3 285 006 B1**
(45) Date of publication and mention of the grant of the patent: **16.12.2020**
(21) Application number: 17185270.0
(22) Date of filing: 08.08.2017
(51) Int. Cl.: F23R 3/20, F02C 7/22, F23R 3/28

(54) **INJECTOR DEVICE AND METHOD FOR MANUFACTURING AN INJECTOR DEVICE**
INJEKTORVORRICHTUNG UND VERFAHREN ZUR HERSTELLUNG EINER INJEKTORVORRICHTUNG
DISPOSITIF D'INJECTEUR ET SON PROCÉDÉ DE FABRICATION

(30) Priority: 16.08.2016 RU 2016133586
(43) Date of publication of application: 21.02.2018
(73) Proprietor: Ansaldo Energia Switzerland AG, 5401 Baden (CH)
(72) Inventor: STYTSENKO, Alexey, 109469 MOSCOW (RU); MYLNIKOV, Sergey, 127273 MOSCOW (RU); BAIBUZENKO, Igor, 129344 MOSCOW (RU); MAURER, Michael, 79713 BAD SÄCKINGEN (DE)
(74) Representative: Bernotti, Andrea

(56) References cited:
- EP-A1- 0 416 542
- EP-A1- 3 023 697
- EP-A1- 3 076 084
- US-A1- 2014 241 871
- US-B1- 6 238 182

## Description

### TECHNICAL FIELD

The present invention relates to an injector device and a method for manufacturing an injector device. In particular, the injector device is for injecting a fuel in a combustion chamber of a gas turbine.

### BACKGROUND

Injector devices are known having an elongated body with a leading edge and a trailing edged having a lobed configuration and provided with nozzles for injection of air, gas fuel and oil fuel. The elongated body houses an oil supply duct and a gas supply duct fluidly connected to the nozzles. The oil supply duct and gas supply duct are connected to each other and are also connected to the elongated body, in order to be supported within the elongated body.

This configuration can cause internal stress in the injector device during operation, because of the thermal deformation of the oil supply duct, gas supply duct and elongated body. The stress can cause damages in the injector device and has to be counteracted.

EP3023697A1 discloses a injector device according to the preamble of claim 1.

### SUMMARY

An aspect of the invention includes providing and injector device that during operation undergoes reduced internal stress when compared with the existing injector devices.

Another aspect of the invention is to indicate a method for manufacturing an injection device that during operation undergoes reduced internal stress when compared with the existing injector devices.

These and further aspects are attained by providing an injector and a method in accordance with the accompanying claims.

### BRIEF DESCRIPTION OF THE DRAWINGS

Further characteristics and advantages will be more apparent from the description of a preferred but non-exclusive embodiment of the injector device and method, illustrated by way of non-limiting example in the accompanying drawings, in which:

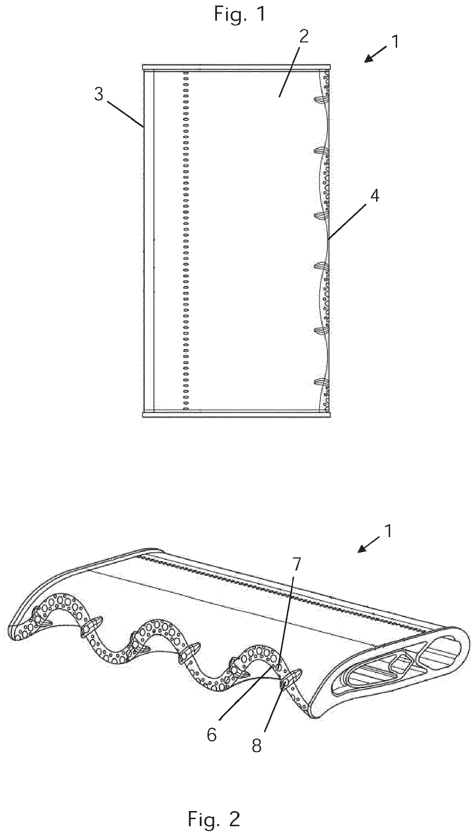

Figures 1 and 2 show a side view and a perspective view of an injection device;

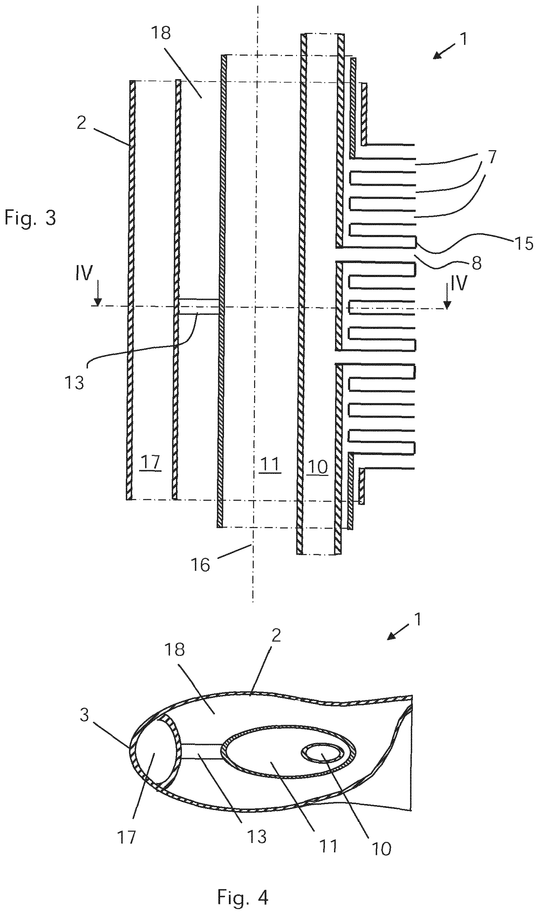

Figures 3 and 4 shows a longitudinal section and a cross section along line IV-IV of figure 3 of the injection device in an embodiment with lobed trailing edge;

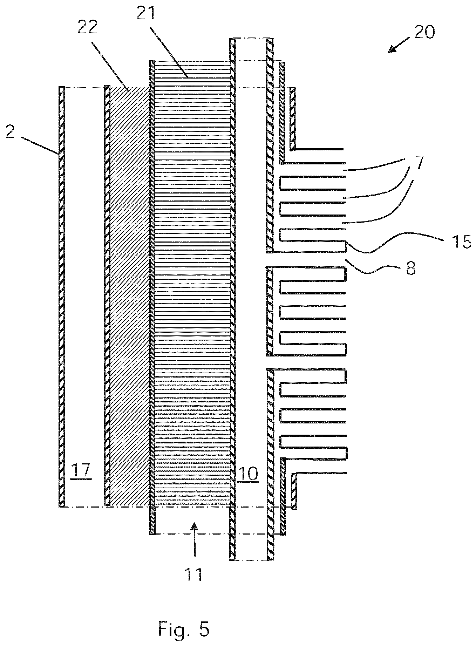

Figure 5 shows an injection structure that can be manufactured by selective laser melting and to be further worked to manufacture the injector device;
Figure 6 shows the injection structure during further working for realizing the injector device;

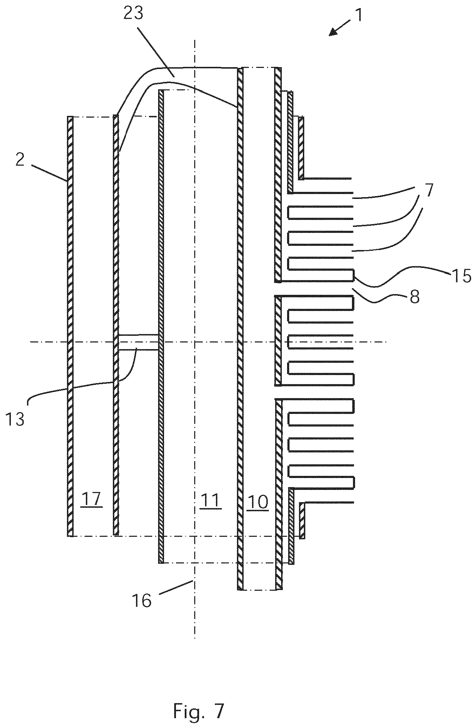

Figure 7 shows a different embodiment of the injector device;

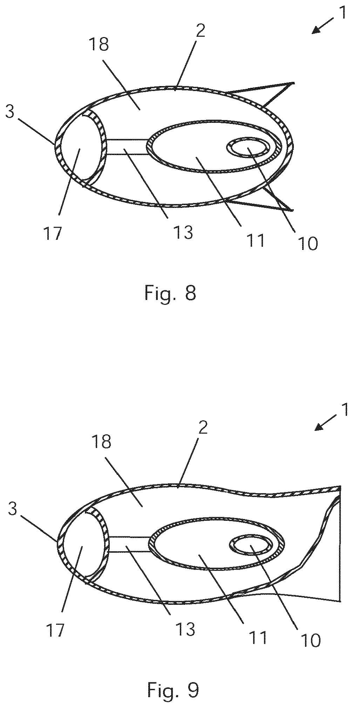

Figure 8 shows a cross section of the injection device in an embodiment with straight trailing edge;
Figure 9 shows a cross section of the injection device in an embodiment with a zig-zag (triangular) trailing edge.

### DETAILED DESCRIPTION OF EXEMPLARY EMBODIMENTS

With reference to the figures, these show an injector device 1 for a burner of a gas turbine.

The injector device 1 comprises an elongated body 2 with a leading edge 3 and a trailing edge 4; the trailing edge 4 has a lobed configuration. Alternatively, the trailing edge can have a straight configuration, e.g. with vortex generators on the elongated body 2, or a zig-zag (triangular) configuration.

The injector device 1 further has air nozzles 6, gas nozzles 7 and oil nozzles 8, which are preferably located at the trailing edge, but they could also be located differently, e.g. the air nozzles 6 and/or gas nozzles 7 and/or oil nozzles 8 can be located on one or both sides of the elongated body in addition to or instead of the trailing edge 4.

Within the elongated body 2 there are provided an oil supply duct 10, which is connected to the oil nozzles 8, and a gas supply duct 11, which is connected to the gas nozzles 7.

According to the invention, the oil supply duct 10 is connected to the gas supply duct 11 only via a connection provided between the oil nozzles 8 and gas nozzles 7, and the gas supply duct 11 is connected to the elongated body 2 only via bridges 13.

For example, as shown in the figures, the connection between the oil supply duct 10 and the gas supply duct 11 is achieved via walls 15 extending between the nozzles 7, 8.

For example the bridges 13 connecting the gas supply duct 11 to the elongated body 2 are elongated elements, extending perpendicularly or substantially perpendicularly to the longitudinal axis 16 of the injection device 1.

The connection between the oil supply duct 10 and the gas supply duct 11 (e.g. the walls 15) preferably is at the terminal part of the nozzles 7, 8.

In one embodiment, the elongated body 2 can have a channel 17 at the leading edge 3, and the bridges 13 are provided only between the gas supply duct 11 and the channel 17.

Advantageously, the injector only has two bridges 13, each bridge being connected at one of the sides of the gas supply duct.

The operation of the injector device is apparent from that described and illustrated and is substantially the following.

This injector device is a component of a reheat burner. A gas turbine with reheat burner has a compressor for compressing air, a first burner for injecting fuel in the compressed air and generated hot gas, a high pressure turbine to partly expand the hot gas (but this high pressure turbine could also not be provided), a reheat burner to inject further fuel and possibly air into the hot gas, possibly partly expanded and a turbine, to expand the hot gas.

In particular, these injector devices transversally extend within a duct that carries the hot gas.

According to the operation mode of the gas turbine, oil fuel can be provided through the oil supply channel 10 to be injected via the nozzles 8 and/or gas fuel can be provided through the gas supply duct 11 to be injected via the nozzles 7; typically air is provided together with the oil fuel and/or gas fuel via the elongated body 2 (in particular through the region 18 thereof). Oil fuel (typically a mixture of oil and water is used, e.g. and oil/water emulsion) and/or gas fuel are thus combusted.

Since the injector device is immersed in hot gas and has a flame downstream of it, it undergoes thermal deformations, (i.e. deformations caused by differential temperature induced deformations of different parts thereof). The structure with only connections between the gas supply duct 11 and elongated body 2 via the bridges 13 and between the gas supply duct 11 and oil supply duct 10 via the walls 15 allows thermal induced deformations, with limited internal stresses.

The present invention also refers to a method for manufacturing an injector device. The method comprises:
- manufacturing by selective laser melting an injector structure 20 having the features described above, e.g. the elongated body 2, the gas supply duct 11, the oil supply duct 10, the nozzles 7, 8. In addition, the injector structure 20 has first support elements 21 between the oil supply duct 10 and the gas supply duct 11 and a second support element 22 between the gas supply duct 11 and the elongated body 2.

The first support elements 21 are used to support the oil supply duct 10 during manufacturing; for example, the first support elements 21 are defined by a plurality of plates, e.g. extending parallel to one another and perpendicular to the oil supply duct 10 and gas supply duct 11, with one end connected to the oil supply duct 10 and another end connected to the gas supply duct 11.

The second support element 22 is used to support the gas supply duct 11 during manufacturing; for example, the second support element 22 is defined by a plate extending parallel to the gas supply duct 11 and elongated body 2.

Selective laser melting (SLM) is a known technique that comprises providing in succession a plurality of layers of metal dust one on top of the others and for each layer selectively melt by laser and then solidify dust according to a predefined pattern, in order to build an object, such as a component of a gas turbine.

In this connection, the preferred built-up direction is from leading edge to trailing edge to have the nozzles in the best built-up orientation for the best surface quality and the minimum requirement for post-machining.

The method further comprises removing the first support elements and the second support elements.

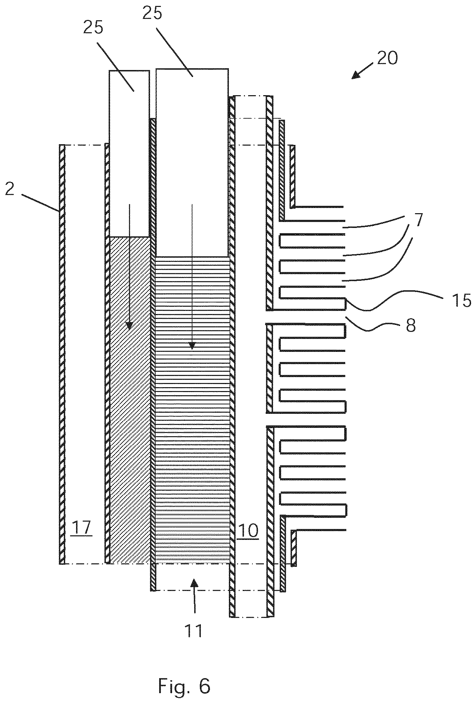

For example, the first support elements 21 can be removed by using a punch and the second support element can be removed by punching or cutting (see figure 6 showing punches 25).

In addition, the injector structure 20 can also comprise third support elements 23 between the oil supply duct 10 and the elongated body 2; for example the oil supply duct 10 can extend outside of the gas supply duct 11 and the third support elements can comprise one or more plates provided between the oil supply duct 10 and the elongated body 2. In this case the method further comprises removing the third support elements 23, for example by cutting or punching.

In the above description the first support elements 21, second support element 22 and third support elements 23 have been described as one or more plates. This structure for the support elements 21, 22, 23 is advantageous because it facilitates punching or cutting.

Naturally the features described may be independently provided from one another. For example, the features of each of the attached claims can be applied independently of the features of the other claims.

In practice the materials used and the dimensions can be chosen at will according to requirements and to the state of the art.

### REFERENCE NUMBERS

- 1: injector device
- 2: elongated body
- 3: leading edge
- 4: trailing edge
- 6: air nozzles
- 7: gas nozzles
- 8: oil nozzles
- 10: oil supply duct
- 11: gas supply duct
- 13: bridge
- 15: wall
- 17: channel
- 18: region of the elongated body 2
- 20: injector structure
- 21: first support elements
- 22: second support element
- 23: third support elements
- 25: punch

## Claims

1. An injector device (1) for a burner of a gas turbine comprising
an elongated body (2) with a leading edge (3) and a trailing edge (4),
gas nozzles (7) and oil nozzles (8),
an oil supply duct (10) housed within the elongated body (2) and connected to the oil nozzles (8),
a gas supply duct (11) housed within the elongated body (2) and connected to the gas nozzles (7),
**characterized in that**
the oil supply duct (10) is connected to the gas supply duct (11) only via a connection provided between at least one oil nozzle (8) and one gas nozzle (7), the gas supply duct (11) is connected to the elongated body (2) only via at least one bridge (13).

2. The injector device (1) of claim 1, **characterized in that** a connection between the oil supply duct (10) and the gas supply duct (11) is at the terminal part of the oil nozzles (8) and gas nozzles (7).

3. The injector device (1) of claim 1, **characterized in that** the elongated body (2) has at least a channel (17) at the leading edge (3), wherein the at least one bridge (13) is provided only between the gas supply duct (11) and the channel (17).

4. The injector device (1) of claim 1, **characterized by** comprising only two bridges (13), each bridge (13) being connected at one of the sides of the gas supply duct (11).

5. The injector device (1) of claim 1, **characterized in that** the trailing edge (4) has a lobed configuration or a straight configuration or a zig-zag configuration.

6. The injector device (1) of claim 1, **characterized by** further comprising air nozzles.

7. The injector device (1) of claim 6, **characterized in that** the air nozzles (6) and/or gas nozzles (7) and/or oil nozzles (8) are at the trailing edge (4).

8. The injector device (1) of claim 1, **characterized by** being manufactured by selective laser melting SLM.

9. A method for manufacturing an injector device (1) according to claim 1, **characterized by** manufacturing by selective laser melting an injector structure (20) having at least the features of the injector device (1) of claim 1 and
at least a first support element (21) between the oil supply duct (10) and the gas supply duct (11),
at least a second support element (22) between the gas supply duct (11) and the elongated body (2),
removing the at least a first support element (21), removing the at least a second support element (22).

10. The method of claim 9, **characterised in that** the injector structure (20) further comprises at least a third support element (23) between the oil supply duct (10) and the elongated body (2), the method further comprising removing the at least a third support element (23).

## Patentansprüche

1. Einspritzvorrichtung (1) für einen Brenner einer Gasturbine, umfassend:
einen länglichen Körper (2) mit einer Vorderkante (3) und einer Hinterkante (4),
Gasdüsen (7) und Öldüsen (8),
eine Ölzuführleitung (10), die in dem länglichen Körper (2) untergebracht und mit den Öldüsen (8) verbunden ist,
eine Gaszuführleitung (11), die in dem länglichen Körper (2) untergebracht und mit den Gasdüsen (7) verbunden ist,
**dadurch gekennzeichnet, dass**
die Ölzuführleitung (10) nur durch eine zwischen mindestens einer Öldüse (8) und einer Gasdüse (7) vorgesehenen Verbindung mit der Gaszuführleitung (11) verbunden ist,
die Gaszuführleitung (11) nur durch mindestens eine Brücke (13) mit dem länglichen Körper (2) verbunden ist.

2. Einspritzvorrichtung (1) nach Anspruch 1, **dadurch gekennzeichnet, dass** eine Verbindung zwischen der Ölzuführleitung (10) und der Gaszuführleitung (11) an dem Endabschnitt der Öldüsen (8) und der Gasdüsen (7) angeordnet ist.

3. Einspritzvorrichtung (1) nach Anspruch 1, **dadurch gekennzeichnet, dass** der längliche Körper (2) an der Vorderkante (3) mindestens einen Kanal (17) aufweist, wobei die mindestens eine Brücke (13) nur zwischen der Gaszuführleitung (11) und dem Kanal (17) angeordnet ist.

4. Einspritzvorrichtung (1) nach Anspruch 1, **dadurch gekennzeichnet, dass** die Einspritzvorrichtung nur zwei Brücken (13) umfasst, wobei jede Brücke (13) mit einer der Seiten der Gaszuführleitung (11) verbunden ist.

5. Einspritzvorrichtung (1) nach Anspruch 1, **dadurch gekennzeichnet, dass** die Hinterkante (4) eine gelappte Konfiguration, eine gerade Konfiguration oder eine Zickzack-Konfiguration aufweist.

6. Einspritzvorrichtung (1) nach Anspruch 1, **dadurch gekennzeichnet, dass** die Einspritzvorrichtung überdies Luftdüsen umfasst.

7. Einspritzvorrichtung (1) nach Anspruch 6, **dadurch gekennzeichnet, dass** die Luftdüsen (6), die Gasdüsen (7) und/oder die Öldüsen (8) an der Hinterkante angeordnet sind.

8. Einspritzvorrichtung (1) nach Anspruch 1, **dadurch gekennzeichnet, dass** die Einspritzvorrichtung mithilfe des selektiven Laserschmelzens (SLM) hergestellt wird.

9. Verfahren zur Herstellung einer Einspritzvorrichtung (1) nach Anspruch 1, wobei das Verfahren durch folgende Schritte gekennzeichnet ist:
Herstellen einer Einspritzstruktur (20) mithilfe des selektiven Laserschmelzens, welche mindestens die Merkmale der Einspritzvorrichtung (1) nach Anspruch 1 aufweist und mindestens ein erstes Stützelement (21) zwischen der Ölzuführleitung (10) und der Gaszuführleitung (11),
mindestens ein zweites Stützelement (22) zwischen der Gaszuführleitung (11) und dem länglichen Körper (2),
Entfernen des mindestens einen ersten Stützelements (21),
Entfernen des mindestens einen zweiten Stützelements (22).

10. Verfahren nach Anspruch 9, **dadurch gekennzeichnet, dass** die Einspritzstruktur (20) zudem mindestens ein drittes Stützelement (23) zwischen der Ölzuführleitung (10) und dem länglichen Körper (2) umfasst und dass das Verfahren zudem das Entfernen des mindestens einen dritten Stützelements (23) umfasst.

## Revendications

1. Dispositif d'injecteur (1) pour un brûleur d'une turbine à gaz comprenant :
un corps allongé (2) avec un bord d'attaque (3) et un bord de fuite (4),
des buses de gaz (7) et des buses d'huile (8),
un conduit d'alimentation en huile (10) logé dans le corps allongé (2) et raccordé aux buses d'huile (8),
un conduit d'alimentation en gaz (11) logé dans le corps allongé (2) et raccordé aux buses de gaz (7),
**caractérisé en ce que** :
le conduit d'alimentation en huile (10) est raccordé au conduit d'alimentation en gaz (11) uniquement par un raccordement prévu entre au moins une buse d'huile (8) et une buse de gaz (7),
le conduit d'alimentation en gaz (11) est raccordé au corps allongé (2) uniquement par au moins un pont (13).

2. Dispositif d'injecteur (1) selon la revendication 1, **caractérisé en ce qu'**un raccordement entre le conduit d'alimentation en huile (10) et le conduit d'alimentation en gaz (11) est au niveau de la partie terminale des buses d'huile (8) et des buses de gaz (7).

3. Dispositif d'injecteur (1) selon la revendication 1, **caractérisé en ce que** le corps allongé (2) a au moins un canal (17) au niveau du bord d'attaque (3), dans lequel le au moins un pont (13) est prévu uniquement entre le conduit d'alimentation en gaz (11) et le canal (17).

4. Dispositif d'injecteur (1) selon la revendication 1, **caractérisé en ce qu'**il comprend uniquement deux ponts (13), chaque pont (13) étant raccordé à l'un des côtés du conduit d'alimentation en gaz (11).

5. Dispositif d'injecteur (1) selon la revendication 1, **caractérisé en ce que** le bord de fuite (4) a une configuration à lobe ou une configuration droite ou une configuration en zigzag.

6. Dispositif d'injecteur (1) selon la revendication 1, **caractérisé en ce qu'**il comprend en outre des buses d'air.

7. Dispositif d'injecteur (1) selon la revendication 6, **caractérisé en ce que** les buses d'air (6) et/ou les buses de gaz (7) et/ou les buses d'huile (8) sont au niveau du bord de fuite (4).

8. Dispositif d'injecteur (1) selon la revendication 1, **caractérisé en ce qu'**il est fabriqué par fusion sélective par laser SLM.

9. Procédé pour fabriquer un dispositif d'injecteur (1) selon la revendication 1, **caractérisé par** l'étape consistant à fabriquer, par fusion sélective au laser, une structure d'injecteur (20) ayant au moins les caractéristiques du dispositif d'injecteur (1) selon la revendication 1, et
au moins un premier élément de support (21) entre le conduit d'alimentation en huile (10) et le conduit d'alimentation en gaz (11),
au moins un deuxième élément de support (22) entre le conduit d'alimentation en gaz (11) et le corps allongé (2),
retirer le au moins un premier élément de support (21), retirer le au moins un deuxième élément de support (22).

10. Procédé selon la revendication 9, **caractérisé en ce que** la structure d'injecteur (20) comprend en outre au moins un troisième élément de support (23) entre le conduit d'alimentation en huile (10) et le corps allongé (2), le procédé comprenant en outre l'étape consistant à retirer le au moins un troisième élément de support (23).
